# EUROPEAN PATENT SPECIFICATION

(11) **EP 2 982 085 B1**
(45) Date of publication and mention of the grant of the patent: **05.06.2024**
(21) Application number: 14753801.1
(22) Date of filing: 14.02.2014
(51) Int. Cl.: H04W 4/24, H04L 12/14, H04M 15/00

(54) **SYSTEM AND METHOD FOR HIERARCHICAL MOBILE POLICY CONTROL AND MOBILE POLICY ROAMING**
SYSTEM UND VERFAHREN ZUR HIERARCHISCHEN MOBILEN RICHTLINIENSTEUERUNG UND MOBILES RICHTLINIEN-ROAMING
SYSTÈME ET PROCÉDÉ PERMETTANT UN CONTRÔLE DE POLITIQUE MOBILE HIÉRARCHIQUE ET UNE ITINÉRANCE DE POLITIQUE MOBILE

(30) Priority: 19.02.2013 US 201361766222 P
(43) Date of publication of application: 10.02.2016
(73) Proprietor: Tata Communications (America) Inc., Herndon, VA 20171 (US)
(72) Inventor: SO, Ning, Plano, TX 75093 (US); PEEBLES, Brian, Cranford, NJ 07016 (US)
(74) Representative: Müller-Boré & Partner Patentanwälte PartG mbB
(86) International application number: PCT/US2014/016563
(87) International publication number: WO 2014/130367

(56) References cited:
- EP-A1- 2 107 780
- US-A1- 2004 059 943
- US-A1- 2007 093 236
- US-A1- 2007 220 251
- US-A1- 2012 099 715
- US-A1- 2012 101 952
- US-A1- 2012 173 746

## Description

### Field of the Invention

The present invention pertains to mobile networks and, more particularly, to a mobile policy hosting system and a method of operating a mobile policy hosting system.

### Background of the Invention

The rapid growth of data access over mobile broadband networks has created problems for the Mobile Network Operator (MNO). The problems are created by the fact that cellular systems have finite resources; radio spectrum and transport resources are limited, expensive, and must be shared among many users and services. The problem is compounded by the fact that mobile broadband networks must support voice, video, and data applications in a single IP-based infrastructure. Further complicating matters is the fact that these converged services each have unique traffic-handling and quality-of-experience ("QoE") requirements. It is therefore becoming increasingly challenging for an MNO to meet level-of-service expectations of the subscriber, both in terms of volume and speed of data and QoE of the media received.

Much of the increase in traffic demanded by the subscriber base is created by "over-the-top" services, such as Skype and Google Talk. A MNO has no way to monetize that traffic short of charging the end user for the volume of data consumed. As a result, given the traditional models by which MNOs extract revenue from their subscriber base, the Average Revenue per User ("ARPU") has declined steadily over the last several years. This has caused many operators to adopt a "defensive" posture; they attempt to limit the usage of their networks in such a way that "most" people get an acceptable experience.

The result of this has been increasing customer dissatisfaction and increasing MNO operational expenditures. Customer dissatisfaction has led to customer churn which is a further drain on MNO revenues.

Given the reality of finite resources (and capital) -a reality that cannot be readily addressed by extra transmission lines and improved efficiency- the problem of increased traffic load is perhaps best addressed by certain management policies. In addition to addressing the problem, further opportunities for monetization can be realized by implementing a set of policy-based service offerings.

Mobile Policy is a collection of operator-defined rules for resource allocation and network use. For example, a policy might dictate that a particular bandwidth is reserved in the radio base station and core network to support a live video conversation. Policy rules also control the priority, packet delay, and acceptable loss of video packets in order for the network to treat the video call in a particular manner. Policy rules can be used to limit traffic rates on the network in order to curb network abusers and provide "fair use;" that is, preventing one user from negatively impacting the quality of another service. Other policy rules include black list (web sites) control and parental controls.

Policy management is the process of applying the mobile policy. Policy management differentiates services (applications) and subscriber types, and then controls the QoE of each. Policy management can play a fundamental role in implementing quality-of-service ("QoS") in mobile broadband. Policy management includes policy enforcement processes. Policy enforcement involves service data flow detection and applies QoS rules to individual service data flows. Policy management is critical in limiting network congestion, enhancing service quality, and monetizing services. Regarding the latter, policy management can create new business models by offering tiered service levels. For example, superior performance and quality can be guaranteed to higher paying subscribers. By improving the quality of content delivery for a fixed period of time, policy control supports impulse buying of premium services. For example, a subscriber can upgrade service for a fixed period of time to watch a high-definition video.

One of the biggest challenges operators face when building policy-based service offerings is the need to provide services that meet their diverse subscriber portfolio. The needs of all subscribers are not necessarily met with a single service offering and the optimal management of traffic on the network is not necessarily met with a single policy. For instance, a simple, "Fair Usage" policy, which nearly every major mobile operator has today, typically only limits the top 5% of users from downloading excessive amounts of content. Other than slightly improving the QoE, this type of policy does very little to benefit the remaining 95% of users. And it comes at the cost of offending the most valuable users who typically go for high-end services. Most users probably do not notice the reduction in traffic congestion and see no value improvement in their overall contract. The operator gains no additional monetary value from such a policy and if anything, risks alienating their high-end users, leading to customer churn in the worst possible subscriber demographic.

It will therefore be appreciated that mobile policy and mobile-policy management are critical considerations for the successful/profitable operation of a mobile network.

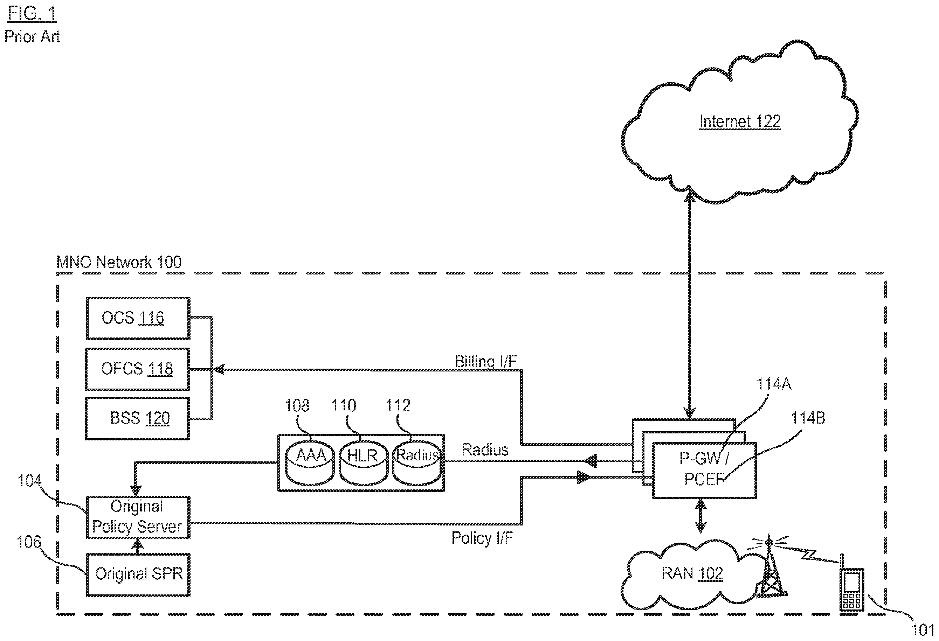

To establish and implement mobile policy typically requires the mobile network operator to deploy a dedicated set of policy-related equipment in their mobile core network with a specific set of policies designed for their network. In such a design, the policy control architecture is flat. That is, a subscriber's network access request is processed by a policy server, which is a server running software having a Policy and Charging Rules Function (this server is also known as a "PCRF"), against the pre-set list of policies. Decisions are enforced through a policy control enforcement function ("PCEF"). FIG. 1 depicts a conventional mobile network **100** with a particular focus on the elements of the network required for policy establishment, implementation, and enforcement.

Salient "elements" of network **100** (the elements can be software, hardware, or a combination thereof) include: radio access network ("RAN") 102, policy server 104, subscriber profile repository ("SPR") 106, Authentication-Authorization-Accounting ("AAA") server 108, Home Location Register ("HLR") 110, signaling protocol ("RADIUS") server 112, packet core gateway switch ("P-GW") **114A,** Online Charging System ("OCS") 116, Offline Charging System ("OFCS") 118, and Billing Support System ("BSS") 120, interrelated as shown.

RAN **102** provides a device, such as a cell phone/computer/user, *etc.* **101** with connectivity to the core network. RAN **102** includes the air interface and base station technology in a cellular network. Policy server or PCRF **104** takes the operator-defined policies and the available network information, including, as appropriate, subscriber information, and makes decisions in real-time as to what policies to implement for each subscriber active on the network. Strictly speaking, the PCRF is a software component, but reference to a "PCRF" is often meant to indicate a policy server; that is, a processor running the policy and charging rules function software.

SPR **106** is a database that stores subscriber business data, including service configurations and allocated price plans, and activity information. The data must be dynamically maintained so that it is as up-to-date as possible.

AAA server **108** provides authentication, authorization, and accounting; that is, it is the security architecture for the system. It enables network **100** to control which users are allowed access to which particular services and also enables the network to track network resource consumption. AAA server **108** stores user profile information, responds to authentication requests, and collects accounting information.

HLR (or HSS) **110** is the home location register. An entry in this register means that the user is a subscriber of the network. If there is no entry in the HLR for a user, it means that the user is not a subscriber; rather, the user is "visiting" the network. Compared to SPR **106,** HLR/HSS **110** contains the relatively more static subscription data needed for network access. RADIUS (Remote Authentication Dial In User Service) **112** is a client/server protocol that enables AAA communications.

P-GW **114A** is a router; it is the link between mobile device **101** and services that reside in an external packet network. It includes a policy and charging enforcement function ("PCEF") **114B** and is sometimes referred to as a "P-GW/PCEF" **114A/B.** PCEF **114B** enforces policy decisions reached by policy server **104.** In conjunction with its PCEF responsibility, P-GW/PCEF **114A/B** functions as a "valve," blocking or passing information coming from an external network, such as Internet **122.**

OCS "online charging system" **116** is a system that enables network **100** to charge its customers, in real time, based on service usage. OFCS or "offline charging system" **118** is a system for prepaid customers that tracks a user's network utilization and decrements the user's account based thereon. The charging information for network resource usage is collected concurrently with that resource usage. The charging information does not affect, in real-time, the service rendered. BSS or "business support system" **120** supports revenue management, such as billing, charging, and settlement. Depending upon implementation, it also supports customer management, product management, and order management.

As an example of the use of the system of FIG. 1, assume that mobile user **101** wishes to access a web site through Internet **122.** The user accesses core network **100** via RAN **102.** The user's IP address is transmitted to P-GW/PCEF **114A/B** and, in conjunction with Radius **112** and AAA **108,** user **101** is authenticated, *etc.* Based on the information contained in AAA **108** and SPR **106,** policy server **104** determines what polic(ies) should apply to user **101.** The policy name, etc., is sent to P-GW/PCEF **114A/B.** If user **101** is permitted to access information from the website (based on the user's remaining usage, the website is not black listed, etc.), the P-GW/PCEF **114A/B** permits the information to be downloaded to the user's browser. Usage is tracked and reported to OCS **116** or OFCS **118,** as appropriate.

Assume that network **100** of FIG. 1 is configured for only a fair usage policy (i.e., this specific user cannot consume more than 50 megabytes per second). Assume further that the mobile network operator decides, in an attempt to attract new subscribers, that it will not charge users for Facebook usage. Since P-GW/PCEF **114A/B** is capable of counting bytes, but may not be able to discern how the bytes are being used, such a policy could not be implemented in network **100.**

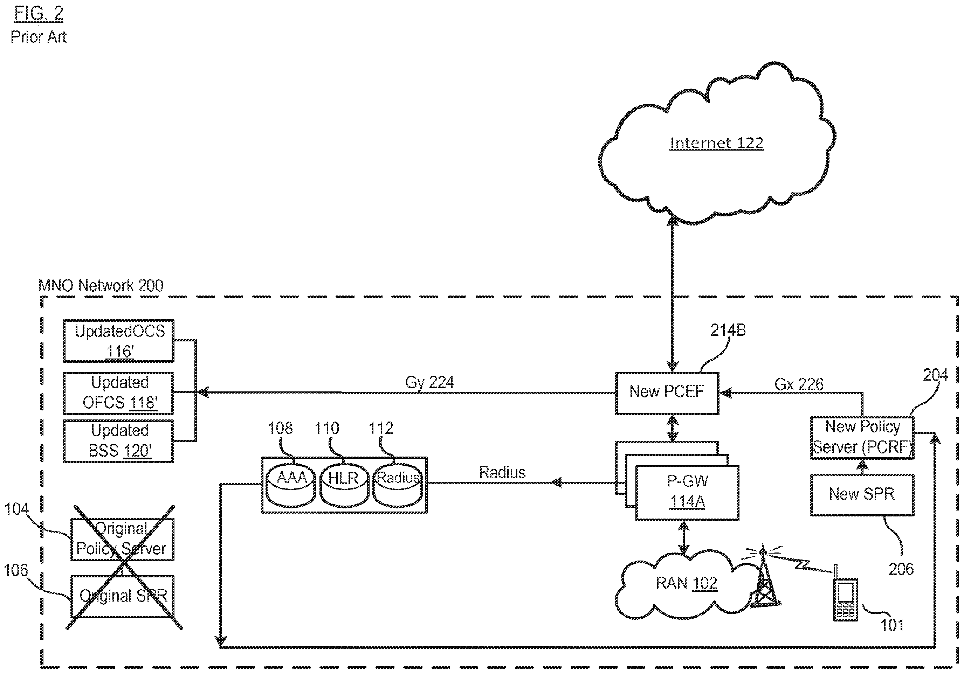

To implement "new" policy, the network would have to be updated as depicted in FIG. 2. As depicted in this Figure, original policy server **104** and SPR **106** must be replaced with new policy server (PCRF) **204** and new SPR **206.** Also, new PCEF **214B** is added to the system. P-GW **114A** remains in the network and provides non-PCEF related functions. Alternatively, a P-GW vendor could provide a newer, suitably sophisticated PCEF in the P-GW. In either case, all billing and charging systems must be updated to support the new policy engines. In this regard, most billing systems in mobile networks have been developed in-house over time as a custom product and cannot be altered to support the latest interfaces, such as Gy interface **224,** which is the on-line charging interface between the PCEF and the OCS.

With continuing reference to FIG. 2 and the example of user **101** accessing Facebook, the user accesses the core network via RAN **102.** The user's IP address is transmitted to P-GW **114A** and, in conjunction Radius server **112** and AAA server **108,** the user is authenticated, etc. Based on the information contained in AAA server **108** and new SPR **206,** new policy server **204** determines what polic(ies) should apply to the user. The policy name, *etc.,* is sent to new PCEF **214B.** The new PCEF is able to determine that the user wishes to access Facebook and, according to the policy transmitted from new policy server **204,** usage associated with Facebook should not be counted against the user's allotted data usage. Usage is reported real time over Gy interface **224** to OCS.

Updating network **100** requires new systems and equipment (PCRF **204,** PCEF **214B,** SPR **208)** or extensive updates (OCS **116',** OFCS **118',** BSS **120').** Furthermore, the new and updated equipment must be integrated in network **100,** which requires operator training, new equipment practices, extensive integration testing, new trouble-shooting practices, monitoring of the system, etc. It is evident that building policy-based services in a home network is an expensive and time-consuming process. In fact, it can cost hundreds of millions of dollars and take 18 months or more to implement. To the extent that there will be continuing pressure on a mobile network operator to update policy, changes might be required every few years.

Subscribers increased dependence on Mobile Broadband, coupled with subscriber behavior in terms of social media, creates the potential for new sources of revenue for mobile network operators. To tap into that revenue will require creative new mobile policies and dynamic policy management. But, as discussed above, establishing and implementing new mobile policy in network can be very costly.

US 2007/220251 describes establishing one or more facets of a policy including facilitating a communication session for an access terminal at a visited network. The access terminal is associated with a home network having a home policy server. The policy is received at a visited policy server of the visited network. The policy comprises the facets. If the facets are unacceptable, the facets are negotiated until a stopping point is reached. The negotiation includes adjusting by the visited policy server at least one facet of the one or more facets, and notifying the home policy server of the adjustment. The facets are established in accordance with the negotiation.

US 2012/101952 describes storing on an end user device one or more notification actions corresponding to one or more notification requests, the end user device being associated with a service plan having a network service usage limit; performing a device action that reflects a past or intended use of the one or more network services; receiving by the end user device one of the one or more notification requests from a network element in response to the device action; performing by the end user device one of the one or more notification actions in response to the one of the one or more notification requests, the one of the one or more notification actions causing the end user device to retrieve a notification message portion associated with a status of the use, the portion being separate from the one of the one or more notification requests; and presenting the notification message on an end user device user interface.

### Summary of the Invention

The present invention provides a way to integrate and implement new mobile polic(ies) into a network without some of the costs and disadvantages of the prior art. This is achieved by a mobile policy hosting system and a method of operating a mobile policy hosting system, as defined in the independent claims, respectively. Preferred embodiments are set forth in the dependent claims.

The illustrative embodiment of the present invention is a mobile policy hosting system ("MPHS"). The MPHS can augment, expand, or even fully replace the existing policy services of one or more MNOs. For example and without limitation, the mobile policy host can provide network and media optimization services, including the ability to monitor, route, filter, cache, modify and/or regulate traffic flow based on a library of operator-configured policies that incorporate parameters such as: user class, traffic type, application demand, and session parameters. The MPHS can be established and operated by a party that is not a mobile network operator. Alternatively, the MPHS can be established and/or operated by a mobile network operator.

In some embodiments, the MPHS includes a policy server (i.e., a PCRF), an SPR database, and a Billing-Conversion Server. Additionally, in some embodiments, to interface with the MPHS, a new PCEF (policy control enforcement function) server is established in the mobile network. The PCRF in the MPHS transmits a policy name to the new PCEF server in the mobile network so that new PCEF can enforce the policy with respect to a subscriber. The Billing-Conversion server converts all monetary information into universally quantifiable measurements, such as quantity of data (e.g., bytes, etc.) or, as applicable, units of "time." This enables any mobile network to use the MPHS regardless of the local currency. Also, to the extent the mobile network's existing billing/charging system is not capable of supporting the Gy (billing/charging) interface, it might not be capable of tracking and sending the type of billing/charging information required by new policies implemented by the MPHS. Thus, regardless of what the policies require, the MPHS tracks bytes (for example), which will be supported by the mobile network's existing charging system and protocols.

In some embodiments, the subscriber information maintained at the MPHS is "protected," such as via encryption or other privacy-maintaining techniques, such as using a records exchange system, as disclosed in US 2014/0179307.

The MPHS is effectively a cloud-based service and, as such, requires minimal modification to an MNO's existing network. The MPHS can provide service offerings to multiple mobile networks at a cost efficiency far exceeding what any one network could achieve. The mobile policy hosting system is well suited to accommodating the variation in statistical load capacity required for a mobile telecommunications service. As such, the services can be provided by the host at a lower risk, a lower cost of entry, and a lower operational expenditure to the MNO than is otherwise possible. For example, using the mobile policy hosting system, an MNO can avoid adding one or two 4 KVA racks of equipment per gateway GPRS support node ("GGSN") that would otherwise be necessary to properly instrument their network with control and enforcement functions.

The MPHS can be used to scale any policy service in capacity and service offerings and can operate independently of the Internet Service Provider ("ISP"). Therefore, regardless of the ISP or the network diversity plan chosen by the MNO, the MPHS can enable these policy services.

The prior art approach to mobile policy implementation, management, and updates, as discussed in conjunction with FIGs. 1 and 2, is flat. That is, in the prior art, an MNO must replace existing equipment in its mobile network to introduce new mobile policy. In contrast, the MPHS provides a hierarchical solution for the MNO wherein the policy-related equipment and systems in the mobile network are not replaced; rather, they are augmented by the capabilities of the MPHS.

In some embodiments, an MNO availing itself of the services of the MPHS will deploy a relatively minimal amount of policy enforcement and data collection equipment necessary to interface with the MPHS. This is the case whether or not the MNO has an existing policy system implemented in their network. If the mobile network does not have an existing dedicated policy system, then the MPHS will serve as the policy system.

In cases in which the mobile network has a policy system, the MPHS can serve to expand that system as follows:
- by augmenting the *capacity* of the mobile network's policy system, so as to support more policy subscribers and traffic volume; and
- by augmenting the *capability* of the mobile network's policy system, so as to support more policies and new types of policy enforcement services.
It is not possible to do this using the prior-art "flat" approach wherein the solution to the problem is simply to replace the existing policy system. By contrast, the MPHS permits an MNO to keep the policy system that it has, augmenting it as desired.

The MPHS can be operated to augment an mobile network's *capacity* as follows:
- A subset of subscriber traffic flow is sent to the mobile network's existing policy system up to some threshold amount, which in some cases relates to the capacity of the extant system;
- When traffic flow exceeds the threshold, overflow traffic is sent to the MPHS for processing. This traffic steering can be done in any of several ways, which can be implemented by one skilled in conjunction with this specification.

The MPHS can be operated to augment an mobile network's *capability* as follows:
- The MNO's existing policy system and the MPHS must have complimentary policies;
- The subscriber flow/request is first sent to the MNO's existing policy system;
- Since the existing system does not contain all the policies, some traffic will pass through the existing system without being affected.
- All traffic then passes to the MPHS and policies are applied to all the traffic.
- In an alternative embodiment, the augmentation can be "reversed" wherein the subscriber flow/request is first sent to the MPHS for processing before being sent to the MNO's existing policy system for processing.

In some embodiments, the MPHS hosts a very extensive set of mobile policies and makes any one or more of those policies available to any number of mobile networks. As such, an MNO can choose whatever combination of policies they wish and can configure those policies any way they wish. And as previously mentioned, the MPHS can be operated to augment the capacity and/or capability of literally any number of mobile networks. That is, two or more different mobile networks can share the MPHS resources to each enforce their respective policies in accordance with the enforcement system described above.

In some embodiments, the MPHS can be used to facilitate roaming between different mobile networks such that policies associated with a subscriber at the subscriber's home mobile network can be enforced when the subscriber roams to another mobile network. In some of such embodiments, the MPHS can establish bilateral roaming agreement with each of a plurality of different MNOs (each participating MNO will individually establish an agreement with the MPHS). This creates a policy-roaming confederacy between the participating MNOs.

From an individual MNO's perspective, only one bilateral agreement with the MPHS is required to get policy roaming access/sharing for the individual MNO's subscriber with one or more other MNOs in the confederacy (e.g., MNOs that signed a bilateral roaming agreement with the MPHS). That is, the individual MNO can share one or more of its policies associated with a subscriber with another MNO in the confederacy. In this manner, if the individual MNO's subscriber roamed onto the other MNO's network, the individual MNO can continue to enforce its own policies with respect to its subscriber's activities even though the subscriber is not within the individual MNO's network (and even though the individual MNO has no access or control over the other MNO's network or policy enforcement functions).

In some embodiments, for example, MNO A can establish membership in a policy roaming confederation and perform the policy roaming sharing/enforcement with MNO B through the MPHS.

MNO A signs a business bilateral policy roaming agreement with the MPHS. This agreement may include one or more policy roaming attributes that MNO A offers to its own roaming subscribers. The agreement may also include the policy attributes the MNO A network can handle and/or accept from other MNOs. In some embodiments, the policy roaming attributes can include prices associated with the roaming policies, allowable policy names, policy details, policy enforcement capabilities, and the like.

MNO A can physically and logically interconnect its network and/or MNO A's existing policy systems with the MPHS' networks and systems. The interconnection of MNO A's policy system with the MPHS system is optional.

Once the system interconnection is established between the MPHS and mobile network A, the policy roaming for network A can be shared with at least one other mobile network (e.g., mobile network B, *etc.)* in the MPHS confederation. In one such embodiment, if a subscriber of MNO A roams into mobile network B, mobile network B can request policy enforcement information associated with MNO A's subscriber from the MPHS. The MPHS will transmit policy information to mobile network B's PCEF in accordance with mobile network A's roaming policy, as it pertains to MNO A's subscriber. Mobile network B's PCEF will apply the received policy information to traffic to or from MNO A's subscriber that is roaming on mobile network B. In this manner, MNO A can alter the network systems (equipment/software) of another mobile network (such as network B), even though mobile network A has no access to the other network's systems.

In some embodiments, this capability can be applied across multiple operators within a common Mobile Operator "Group." Many such Groups hold MNOs in multiple countries. In the absence of the system disclosed herein, establishing a common roaming policy across all these operators within a Group is exceedingly difficult and expensive. In particular, the networks of one or more MNOs in such a Group may be built differently or one or more MNOs in such a Group may be under different legal or geographic restrictions that require different policies. The MPHS described above can bring all of the Group policies together under one control for common orchestration throughout the Group. When the Group employs the MPHS, a subscriber of one MNO in the Group can be configured with the same user experience, regardless of which MNO the subscriber roams to in the Group.

### Brief Description of the Drawings

**FIG.** 1 depicts the salient elements for policy implementation and enforcement in a prior art mobile network.
**FIG.** 2 depicts a prior art approach for upgrading the mobile network of FIG. 1 to implement and enforce new policies.
**FIG.** 3 depicts the salient elements of a Mobile Policy Hosting Service for use in conjunction with upgrading the policy offerings of a mobile network, in accordance with the illustrative embodiment of the invention.
**FIG.** 4 depicts how the Mobile Policy Hosting Service of FIG. 3 can used to enable broadband roaming, wherein policies applicable to a subscriber from a first network can be accessed to control the activities of the first network's subscriber when that subscriber is roaming in a second network.

### Detailed Description

Listing of acronyms used in this disclosure:

| | |
|---|---|
| • "AAA": | Authentication-Authorization-Accounting server; |
| • "ARPU": | Average Revenue per User; |
| • "QoE": | Quality-of-experience; |
| • "MNO": | Mobile Network Operator; |
| • "QoS": | Quality-of-service; |
| • "RAN": | Radio access network; |
| • "PCRF": | Policy and Charging Rules function; |
| • "SPR": | Subscriber profile repository; |
| • "HLR": | Home Location Register; |
| • "P-GW": | Packet core gateway switch; |
| • "OCS": | Online Charging System; |
| • "OFCS": | Offline Charging System; |
| • "BSS": | Billing Support System; |
| • "RADIUS": | Remote Authentication Dial In User Service; |
| • "PCEF": | Policy and charging enforcement function; |
| • "MPHS": | Mobile policy hosting system; |
| • "RES": | Records Exchange System. |

The acronym "MNO" - mobile network operator - is used interchangeably herein with the term "mobile network".

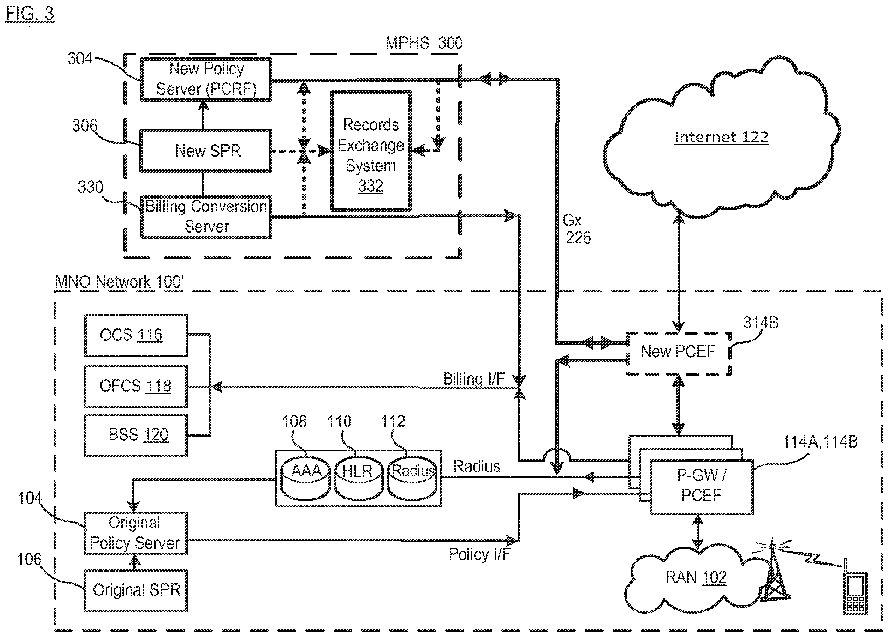

FIG. 3 depicts Mobile Policy Hosting System ("MPHS") **300** and mobile network **100',** which is a modification of mobile network **100** for use with the MPHS.

Mobile network **100'** includes the various network elements discussed in conjunction with network **100** of FIG. 1 including: RAN **102,** PCRF server **104,** SPR **106,** AAA server **108,** HLR/HSS **110,** Radius server **112,** P-GW/PCEF **114A/B,** OCS **116,** OFCS **118,** and BSS **120,** interrelated as shown. In the illustrative embodiment, network **100'** also includes new PCEF **314B.**

MPHS **300** includes: policy server (PCRF) **304,** SPR **306,** Billing-Conversion Server **330,** and, optionally, a Records Exchange System ("RES") **332.**

Hosted policy server PCRF **304** accesses a plurality of mobile policies (from processor-accessible memory) and makes any one or more of those policies available to any number of MNOs. New SPR database **306** contains subscriber business data, including service configurations and allocated price plans. Billing-Conversion server **330** runs software for converting all monetary information into universally quantifiable measurements, such as quantity of data (e.g., bytes, etc.) or, as applicable, units of "time."

MPHS **300** is a data processing system comprising processors, processor-accessible storage, and transceivers. In the illustrative embodiment, servers **304** and **330** are general-purpose processors. A "processor" is hardware, or hardware and software, which perform mathematical and/or logical operations. Typically, such mathematical and/or logical operations are performed as defined by a set of instructions. Such instructions might be stored in some form of memory, or they might be encoded in hardware as interconnections between hardware elements. In the former scenario, it is common to refer to such instructions as "software" even if they are stored in non-transitory memory. The latter scenario might be implemented, for example, as a gate array, in which case the gate array might also act as the processor. In the illustrative embodiment, servers **304** and **330** are capable of, among other tasks, running an operating system, executing specialized application software, and accessing information that is stored in processor-accessible storage, and optionally populating, updating, and managing data in processor-accessible storage. It will be clear to those skilled in the art how to make and use servers, such as PCRF **304** and Billing-Conversion server **330,** and how to write software required to accomplish the intended purpose of these servers.

Processor-accessible storage, which is used, for example, to store the specialized application software, is a non-volatile, non-transitory memory technology (e.g., hard drive(s), flash drive(s), etc. The data in SPR **306** is stored, for example, in processor-accessible storage. And the various policies accessed by PCRF **304** will be contained in processor-accessible storage. The SPR database and the mobile policy information can be contained in the same processor-accessible storage or in separate processor-accessible storage. It will be clear to those skilled in the art how to make and use embodiments that comprise more than one memory, or comprise subdivided segments of memory, or comprise a plurality of memory technologies that collectively store specialized application software, the SPR database, policy information, and the like.

Optionally, some or all of the information contained in new SPR database **306,** and/or information accessed by new PCRF **304** and/or information accessed by Billing-Conversion server **330,** to the extent confidential, can be securely stored in Records Exchange System **332,** such as disclosed in U.S. Pat. Application S.N. 13/724,956.

The MNO that operates network **100',** wishing to avail itself of one or more "new" policies available through MPHS **300,** installs new PCEF **314B** in its mobile network. As previously discussed, the PCEF enforces policy. In some embodiments, new PCEF **314B** only enforces policies that are new to network **100',** as provided by new PCRF **304.** Gx protocol **226,** which is a control signal for real-time traffic flow (DIAMETER protocol), is used for communications between new PCEF **314B** in network **100'** and new PCRF **304** in MPHS **300.**

It is notable that the only element in Network **100'** that is "new" is PCEF **314B.** Original policy server **104** and PCEF **114B** in packet core gateway switch P-GW **114A** can be used, as appropriate to, specify and enforce the MNO's legacy policies. Again, to the extent that a subscriber request implicates new policy provided by MPHS **300,** new PCRF **304** transmits the policy title to new PCEF **314B.** The new PCEF then enforces the policy (e.g., as to a subscriber's request, *etc.).*

It is not necessary to modify the MNO's existing billing/charging system since Billing-Conversion Server **330** in MPHS **300** ensures that the information required for billing is provided in a format that is readily handled by the existing billing/charging system (i.e., OCS **116,** OFCS **118,** BSS **120).**

In some embodiments, new PCEF **314B** is part of MPHS **300** rather than in the network such as network **100'.** In such embodiments, no updated or new equipment is required for a MNO's network accept new policies from MPHS **300.**

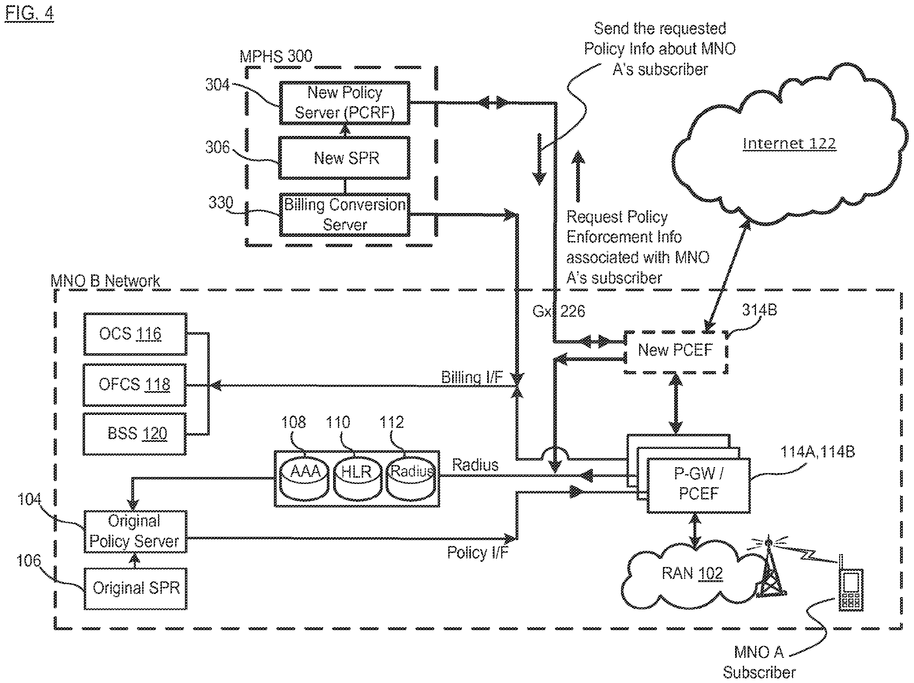

FIG. 4 depicts an example wherein mobile policy hosting system MPHS **300** supports mobile broadband roaming. In the embodiment depicted in FIG. 4, a subscriber of MNO A's network is roaming in MNO B's network. All elements of the network of MNO B are as discussed in conjunction with Network **100'** depicted in FIG. 3. That is, MNO B's network comprises: RAN **102,** PCRF server **104,** SPR **106,** AAA server **108,** HLR/HSS **110,** Radius server **112,** P-GW/PCEF **114A/B,** OCS **116,** OFCS **118,** and BSS **120,** an new PCEF **314B,** interrelated as shown. It is assumed that both MNO A and MNO B belong to a confederation established by MPHS **300.**

In the example depicted in FIG. 4, a subscriber from MNO A roams into MNO B's network and wishes to access Internet **122.** New PCEF **314B** in MNO B's network requests policy enforcement information associated with MNO A's subscriber from MPHS **300.** New PCRF **304** in MPHS **300** transmits policy information pertaining to the subscriber to new PCEF **314B** in MNO B's network. New PCEF **314B** in MNO B's network will apply the received policy information to requests for Internet access issued by MNO A's subscriber.

It is to be understood that many variations of the invention can easily be devised by those skilled in the art after reading this disclosure, as long as they do not depart from the scope of the invention as it is depicted in the appended claims.

## Claims

1. A mobile policy hosting system (300) for integrating and implementing new mobile policies into mobile operator networks, the mobile policy hosting system (300) comprising:
processor-accessible storage for storing mobile policies of a plurality of different mobile network operators (100'), each of the mobile policies being available to each mobile network operator (100') of the plurality of different mobile network operators (100');
a subscriber profile repository (306) comprising a database maintained in the processor-accessible storage, wherein the database contains subscriber business data for subscribers of the plurality of different mobile network operators (100');
a policy server (304) for:
(a) accessing subscriber business data contained in the database of the subscriber profile repository (306);
(b) accessing the plurality of mobile policies stored in the processor-accessible storage and identifying a mobile policy applicable to a subscriber of a first one of the plurality of different mobile operators (100') in response to a request from a policy charging and enforcement function server (314B) of a second one of the plurality of different mobile network operators (100') when the subscriber of the first one of the plurality of different mobile operators (100') uses a network of the second one of the plurality of different mobile network operators (100'); and
(c) transmitting information pertaining to the mobile policy applicable to the subscriber of the first one of the plurality of different mobile operators (100') to the policy charging and enforcement function server (314B) of the second one of the plurality of different network operators (100'); and
a billing conversion server (330) for converting monetary information relating to use of the network of the second one of the plurality of different mobile network operators (100'), including internet access, by the subscriber of the first one of the plurality of different mobile operators (100'), to a non-monetary quantity for reporting to the first one of the plurality of different mobile network operators (100').

2. The system of claim 1 wherein the policy server (304) communicates with the policy charging and enforcement function server (314B) using a Gx protocol.

3. The system of claim 1 wherein the non-monetary quantity is bytes of data.

4. The system of claim 1 wherein the non-monetary quantity is time.

5. The system of claim 1 wherein the processor-accessible storage is disposed in a records exchange system (332).

6. The system of claim 1 wherein the mobile policy hosting system (300) is operated by a party that is not a mobile network operator.

7. The system of claim 1 wherein the mobile policy applicable to the subscriber of a first one of the plurality of different mobile operators (100') is not available via a policy server (104) of the first one of the plurality of different mobile network operators (100') or the policy server (104) of the second one of the plurality of different mobile network operators (100').

8. The system of claim 1 wherein the policy server (304) is for accessing the plurality of mobile policies stored in the processor-accessible storage and identifying a mobile policy applicable to a subscriber of a third one of the plurality of different mobile operators (100') in response to a request from a policy charging and enforcement function server (314B) of the third one of the plurality of different mobile network operators (100') when the subscriber of the third one of the plurality of different mobile operators (100') uses a network of the third one of the plurality of different mobile network operators (100').

9. The system of claim 8, wherein the policy server (304) is for transmitting information pertaining to the mobile policy applicable to the subscriber of the third one of the plurality of different mobile operators (100') to the policy charging and enforcement function server (314B) of the third one of the plurality of different mobile network operators (100').

10. The system of claim 9, wherein the billing conversion server (330) is for converting monetary information relating to the use of the network of the third one of the plurality of different mobile network operators (100'), including internet access, by the subscriber of the third one of the plurality of different mobile operators (100'), to a non-monetary quantity for reporting to the third one of the plurality of different mobile network operators (100').

11. A method for operating the hosted mobile policy system of any of claims 1 to 10.

## Patentansprüche

1. Hosting-System für Mobilfunkrichtlinien (300) zum Integrieren und Implementieren neuer Mobilfunkrichtlinien in Mobilfunknetzen, wobei das Hosting-System für Mobilfunkrichtlinien (300) umfasst:
einen Speicher, auf den ein Prozessor zugreifen kann, zum Speichern von Mobilfunkrichtlinien einer Vielzahl von verschiedenen Mobilfunknetzbetreibern (100'), wobei jede der Mobilfunkrichtlinien für jeden Mobilfunknetzbetreiber (100') der Vielzahl von verschiedenen Mobilfunknetzbetreibern (100') verfügbar ist;
ein Teilnehmerprofil-Repository (306), umfassend eine Datenbank, die in dem Speicher, auf den ein Prozessor zugreifen kann, verwaltet wird, wobei die Datenbank Teilnehmergeschäftsdaten für Teilnehmer der Vielzahl von verschiedenen Mobilfunknetzbetreibern (100') enthält;
einen Richtlinienserver (304) zum:
(a) Zugreifen auf Teilnehmergeschäftsdaten, die in der Datenbank des Teilnehmerprofil-Repository (306) enthalten sind;
(b) Zugreifen auf die Vielzahl von Mobilfunkrichtlinien, die in dem Speicher, auf den ein Prozessor zugreifen kann, gespeichert sind, und Identifizieren einer Mobilfunkrichtlinie, die auf einen Teilnehmer einer ersten der Vielzahl von verschiedenen Mobilfunkbetreibern (100') anwendbar ist, als Reaktion auf eine Anforderung von einem Richtlinienerhebungs- und Durchsetzungsfunktionsserver (314B) einer zweiten der Vielzahl von verschiedenen Mobilfunknetzbetreibern (100'), wenn der Teilnehmer des ersten der Vielzahl von verschiedenen Mobilfunkbetreibern (100') ein Netz des zweiten der Vielzahl von verschiedenen Mobilfunknetzbetreibern (100') verwendet; und
(c) Übertragen von Informationen, die sich auf die Mobilfunkrichtlinie beziehen, die auf den Teilnehmer des ersten der Vielzahl von verschiedenen Mobilfunkbetreibern (100') anwendbar ist, an den Richtlinienerhebungs- und Durchsetzungsfunktionsserver (314B) des zweiten der Vielzahl von verschiedenen Netzbetreibern (100'); und
einen Abrechnungsumwandlungsserver (330) zum Umwandeln von monetären Informationen, die sich auf das Verwenden des Netzes des zweiten der Vielzahl von verschiedenen Mobilfunknetzbetreibern (100') beziehen, einschließlich des Internetzugangs, durch den Teilnehmer des ersten der Vielzahl von verschiedenen Mobilfunkbetreibern (100'), in eine nicht-monetäre Größe zum Melden an den ersten der Vielzahl von verschiedenen Mobilfunknetzbetreibern (100').

2. System nach Anspruch 1, wobei der Richtlinienserver (304) mit dem Richtlinienerhebungs- und Durchsetzungsfunktionsserver (314B) unter Verwendung eines Gx-Protokolls kommuniziert.

3. System nach Anspruch 1, wobei es sich bei der nicht-monetären Größe um Datenbytes handelt.

4. System nach Anspruch 1, wobei es sich bei der nicht-monetären Größe um Zeit handelt.

5. System nach Anspruch 1, wobei der Speicher, auf den ein Prozessor zugreifen kann, in einem Datenaustauschsystem (332) angeordnet ist.

6. System nach Anspruch 1, wobei das Hosting-System für Mobilfunkrichtlinien (300) von einem Teilnehmer betrieben wird, der kein Mobilfunknetzbetreiber ist.

7. System nach Anspruch 1, wobei die Mobilfunkrichtlinie, die für den Teilnehmer eines ersten der Vielzahl von verschiedenen Mobilfunkbetreibern (100') anwendbar ist, nicht über einen Richtlinienserver (104) des ersten der Vielzahl von verschiedenen Mobilfunknetzbetreibern (100') oder den Richtlinienserver (104) des zweiten der Vielzahl von verschiedenen Mobilfunknetzbetreibern (100') verfügbar ist.

8. System nach Anspruch 1, wobei der Richtlinienserver (304) dazu dient, auf die Vielzahl von Mobilfunkrichtlinien zuzugreifen, die in dem Speicher, auf den ein Prozessor zugreifen kann, gespeichert sind, und eine Mobilfunkrichtlinie zu identifizieren, die auf einen Teilnehmer einer dritten der Vielzahl von verschiedenen Mobilfunkbetreibern (100') anwendbar ist, als Reaktion auf eine Anforderung von einem Richtlinienerhebungs- und Durchsetzungsfunktionsserver (314B) der dritten der Vielzahl von verschiedenen Mobilfunknetzbetreibern (100'), wenn der Teilnehmer des dritten der Vielzahl von verschiedenen Mobilfunkbetreibern (100') ein Netz des dritten der Vielzahl von verschiedenen Mobilfunknetzbetreibern (100') verwendet.

9. System nach Anspruch 8, wobei der Richtlinienserver (304) dazu dient, Informationen zu übertragen, die sich auf die Mobilfunkrichtlinie beziehen, die auf den Teilnehmer des dritten der Vielzahl von verschiedenen Mobilfunkbetreibern (100') anwendbar ist, an den Richtlinienerhebungs- und Durchsetzungsfunktionsserver (314B) des dritten der Vielzahl von verschiedenen Mobilfunknetzbetreibern (100').

10. System nach Anspruch 9, wobei der Abrechnungsumwandlungsserver (330) dazu dient, monetäre Informationen umzuwandeln, die sich auf das Verwenden des Netzes des dritten der Vielzahl von verschiedenen Mobilfunknetzbetreibern (100'), einschließlich des Internetzugangs, durch den Teilnehmer des dritten der Vielzahl von verschiedenen Mobilfunkbetreibern (100') beziehen, in eine nicht-monetäre Größe zum Melden an den dritten der Vielzahl von verschiedenen Mobilfunknetzbetreibern (100').

11. Verfahren zum Betreiben des gehosteten Mobilfunkrichtliniensystems nach einem der Ansprüche 1 bis 10.

## Revendications

1. Système d'hébergement de politiques mobiles (300) pour l'intégration et la mise en oeuvre de nouvelles politiques mobiles dans des réseaux d'opérateurs mobiles, le système d'hébergement de politiques mobiles (300) comprenant :
un stockage accessible au processeur pour stocker des politiques mobiles d'une pluralité d'opérateurs de réseaux mobiles différents (100'), chacune des politiques mobiles étant disponible pour chaque opérateur de réseau mobile (100') de la pluralité d'opérateurs de réseaux mobiles différents (100') ;
un référentiel de profils d'abonnés (306) comprenant une base de données maintenue dans le stockage accessible au processeur, la base de données contenant des données commerciales d'abonnés pour des abonnés de la pluralité d'opérateurs de réseaux mobiles différents (100') ;
un serveur de politiques (304) pour :
(a) accéder aux données commerciales d'abonnés contenues dans la base de données du référentiel de profils d'abonnés (306) ;
(b) accéder à la pluralité de politiques mobiles stockées dans le stockage accessible au processeur et identifier une politique mobile applicable à un abonné d'un premier de la pluralité d'opérateurs mobiles différents (100') en réponse à une demande d'un serveur de fonction de facturation et d'application de politiques (314B) d'un deuxième de la pluralité d'opérateurs de réseaux mobiles différents (100') lorsque l'abonné du premier de la pluralité d'opérateurs mobiles différents (100') utilise un réseau du deuxième de la pluralité d'opérateurs de réseaux mobiles différents (100') ; et
(c) transmettre des informations concernant la politique mobile applicable à l'abonné du premier de la pluralité d'opérateurs mobiles différents (100') au serveur de fonction de facturation et d'application de politiques (314B) du deuxième de la pluralité d'opérateurs de réseaux différents (100') ; et
un serveur de conversion de facturation (330) pour convertir des informations monétaires relatives à l'utilisation du réseau du deuxième de la pluralité d'opérateurs de réseaux mobiles différents (100'), y compris l'accès à Internet, par l'abonné du premier de la pluralité d'opérateurs mobiles différents (100'), en une quantité non monétaire à rapporter au premier de la pluralité d'opérateurs de réseaux mobiles différents (100').

2. Système selon la revendication 1, dans lequel le serveur de politiques (304) communique avec le serveur de fonction de facturation et d'application de politiques (314B) à l'aide d'un protocole Gx.

3. Système selon la revendication 1, dans lequel la quantité non monétaire est des octets de données.

4. Système selon la revendication 1, dans lequel la quantité non monétaire est le temps.

5. Système selon la revendication 1, dans lequel le stockage accessible au processeur est disposé dans un système d'échange de documents (332).

6. Système selon la revendication 1, dans lequel le système d'hébergement de politiques mobiles (300) est exploité par une partie qui n'est pas un opérateur de réseau mobile.

7. Système selon la revendication 1, dans lequel la politique mobile applicable à l'abonné d'un premier de la pluralité d'opérateurs mobiles différents (100') n'est pas disponible via un serveur de politiques (104) du premier de la pluralité d'opérateurs de réseaux mobiles différents (100') ou le serveur de politiques (104) du deuxième de la pluralité d'opérateurs de réseaux mobiles différents (100').

8. Système selon la revendication 1, dans lequel le serveur de politiques (304) est pour accéder à la pluralité de politiques mobiles stockées dans le stockage accessible au processeur et à identifier une politique mobile applicable à un abonné d'un troisième de la pluralité d'opérateurs mobiles différents (100') en réponse à une demande d'un serveur de fonction de facturation et d'application de politiques (314B) du troisième de la pluralité d'opérateurs de réseaux mobiles différents lorsque l'abonné du troisième de la pluralité d'opérateurs mobiles différents (100') utilise un réseau du troisième de la pluralité d'opérateurs de réseaux mobiles différents (100').

9. Système selon la revendication 8, dans lequel le serveur de politiques (304) est pour transmettre des informations concernant la politique mobile applicable à l'abonné du troisième de la pluralité d'opérateurs mobiles différents (100') au serveur de fonction de facturation et d'application de politiques (314B) du troisième de la pluralité d'opérateurs de réseaux mobiles différents (100').

10. Système selon la revendication 9, dans lequel le serveur de conversion de facturation (330) est pour convertir les informations monétaires relatives à l'utilisation du réseau du troisième de la pluralité d'opérateurs de réseaux mobiles différents (100'), y compris l'accès à Internet, par l'abonné du troisième de la pluralité d'opérateurs mobiles différents (100'), en une quantité non monétaire à rapporter au troisième de la pluralité d'opérateurs de réseaux mobiles différents (100').

11. Procédé d'exploitation du système de politiques mobiles hébergées selon l'une quelconque des revendications 1 à 10.
